# EUROPEAN PATENT APPLICATION

(11) **EP 0 955 218 A1**
(43) Date of publication of application: **10.11.1999**
(21) Application number: 99303712.6
(22) Date of filing: 07.05.1999
(51) Int. Cl.: B60R 25/02, B62D 1/16

(54) **Vehicle steering shaft with a localised formed lock slot**

(30) Priority: 08.05.1998 US 74740
(71) Applicant: THE TORRINGTON COMPANY, Torrington, Connecticut 06790 (US)
(72) Inventor: Hitchcock, Arthur, Thomaston, Connecticut 06787 (US); Calabrese, Paul, Torrington, Connecticut 06790 (US)
(74) Representative: Feakins, Graham Allan

(57) **Abstract**

A steering shaft, in a lockable steering column, consists of a hollow cylindrical tube (30) mounted in bearings (21, 22) within a steering column sleeve and may have upper and lower ends formed for connection to a steering wheel and to a steering gear box, respectively. An axially disposed lock slot (35) is provided in the wall of the hollow tube (30) for locking the steering shaft against rotation when engaged by a lock pawl (55) from a lock housing in the steering column, the lock slot being a recess (40) formed without breaching the wall of the hollow cylindrical tube (30).

## Description

This invention relates generally to vehicle steering columns and more particularly to steering shafts in such columns having locally formed lock slots in tubular shafts.

Steering column locking devices usually include slots which prevent rotation of the steering wheel when the ignition switch of the vehicle is in the locked condition and the slots are engaged by a locking pawl activated by the switch. Since steering shafts are commonly made as solid rods, it is common practice to form the locking slot by piercing a separate hollow sleeve and then pressing or otherwise fixing the sleeve to the steering shaft to provide the steering shaft locking linkage. In some cases, the locking slot is milled or stamped into the surface of the solid steering shaft for direct engagement by the locking pawl. Solid shafts are heavy, and hollow sleeves may not reliably grip on shafts. Thus, such assembly is often unnecessarily cumbersome, inefficient and costly.

In some designs the assembled steering shaft has been replaced by a single-piece tubular upper steering shaft with a pierced lock slot. This has significantly reduced the cost and complexity of steering shafts compared to former designs. However, the pierced lock slot frequently fails in fatigue under cyclic loading and leads to fracture of the steering shaft, thereby potentially creating a vehicle safety hazard. A typical fatigue test employs a tube having a length of approximately 20 inches (500 mm), a diameter of approximately 1 inch (25 mm), and a wall thickness of approximately ⅛ inch (3.1 mm). About 3.9 inches (98 mm) from one end of the tube is a rectangular pierced lock slot of length 1⅛ inch (28 mm) and width ¼ inch (6.25 mm) with corner radii of .030 inches (.762 mm). The tube is fixed at one end and an alternating radial torque of 100 foot pounds (130 Newton meters) is applied to the other end. Tubes of this design begin to exhibit fatigue cracks at the slot corners at about 1000 to 2000 cycles, and completely fail at about 5000 to 8000 cycles. This is insufficient fatigue life for application to vehicles which may have lives in excess of twenty years.

Assembly of these tubular steering shafts usually entails attachment of fittings for connecting the shaft to the steering wheel and the steering gear box, respectively. These attachments may be made by welding, brazing, adhesive bonding or mechanically fastening the fittings to the steering shaft. Each of these operations is a possible source of assembly defects and repair costs.

According to one aspect of the present invention, there is provided a steering shaft supported in a steering column sleeve, said steering column sleeve being fixedly engaged with a fixed steering column lock housing, said steering shaft comprising a hollow cylindrical-walled tube having upper and lower ends and mounted in a lower bearing and an upper bearing within said steering column sleeve, and an axially disposed lock slot, having sides parallel to a radius extending from the centre of the hollow tube through a centreline of said lock slot in the wall of said hollow tune for locking said steering shaft against rotation when engaged by a lock pawl radially extendible from the fixed steering column lock housing; characterised in that said lock slot comprises a straight-side local recess formed without breaching the wall of said hollow cylindrical tube.

According to a second aspect of the present invention, there is provided a vehicle steering shaft with a hollow tube having an axially extending lock slot, characterised in that said lock slot is a recess formed without breaching the wall of said hollow tube.

According to a third aspect of the present invention, there is provided a method for making a steering shaft for use in a steering column sleeve fixedly engaged with a fixed lock housing, said lock housing having a radially movable lock pawl for locking said stereing shaft against rotation, in a lockable steering column, said method comprising providing a hollow cylindrical-walled tube having first and second ends and forming a straight-sided local axially disposed lock slot in the wall of said hollow tube bear the first end thereof, for releasable engagement by said lock pawl; characterised in that said lock slot is formed between a punch tool and a mandrel by displacing a portion of the wall of said tube radially inwardly into a slot in said mandrel without breaching the wall of the hollow cylindrical tube.

For a better understanding of the invention and to show how the same may be carried into effect, reference will now be made, by way of example to the accompanying drawings, in which:-
Figures 1A and 1B show a fragmentary radial view and a transverse cross-sectional view, respectively, of a steering shaft tube of the prior art;
Figures 2A, 2B, and 2C show a fragmentary radial view and transverse and longitudinal cross-sectional views, respectively, of the present steering shaft; and
Figure 3 shows a portion of a steering column assembly to illustrate the locked condition of the present steering shaft.

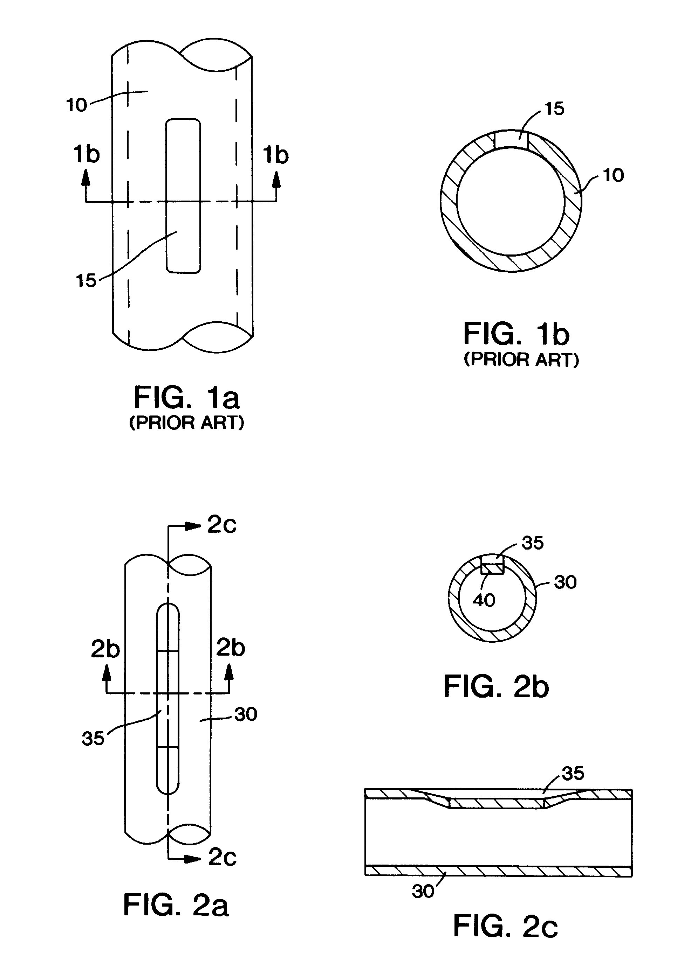

The prior art steering shaft 10 shown in Figures 1A and 1B illustrates the pierced slot 15 commonly used to provide a steering shaft locking capability. When subjected to cyclic torsional loading, a steering shaft 10 having a slot 15 as illustrated will fail due to fatigue cracking initiated at the corners of the slot 15 in both views. Although a radius of almost 1 mm is provided in each corner, as seen in Figure 1A, the free edges of the slot 15 seen in Figure 1B provide a notch effect at each corner where crack initiation is favoured.

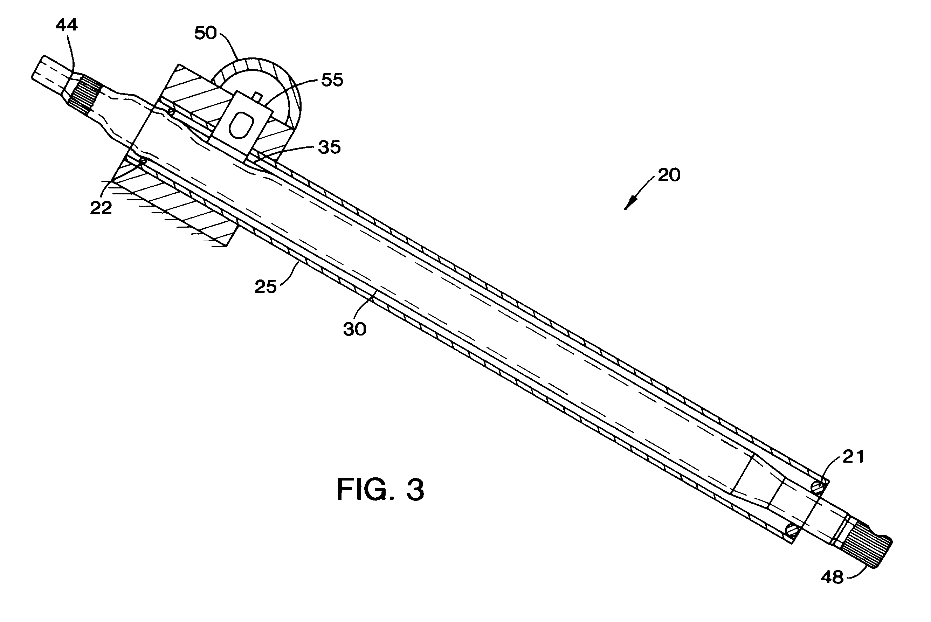

The formed slot 35 in the present steering shaft 30 is seen in Figures 2A, 2B and 2C. Also, Figure 3 shows the present steering shaft 30 incorporated in a steering column assembly 20. In this case, the shaft 30 is not pierced by the slot 35. Instead, the slot 35 is formed between a punch tool and a mandrel without breaching the wall of the shaft 30. The punch tool travel is limited so that, although the sides of the slot (as seen in Figure 2B) are straight (as are those of the prior art shaft of Fig. 1B), the wall of the shaft 30 is not breached. The resulting straight-sided non-pierced slot 35 is as resistant to camming-out by the locking pawl 55 as is the fully-pierced slot 15 of the prior art. Thus, the slot 35 has sufficient depth and width to receive the locking pawl 55 while retaining the displaced metal 40 as reinforcement against fatigue stresses under cyclic torsional loading in use. Note that the notch effect associated with the free edges of the pierced slot 15 of Figures 1A and 1B is not present in the formed slot 35 of the present steering shaft.

Figure 3 shows a schematic view of a steering column assembly 20, in which the steering shaft 30 is supported by upper bearing 22 and lower bearing 21 within a steering column sleeve 25. The locking pawl 55 is shown projecting from the ignition lock housing 50 and engaging the lock slot 35 to lock the steering shaft 30 against rotation. In this design, the steering wheel connecting fitting 44 and the steering gear box connecting fitting 48 are integrally formed on the ends of the hollow tubular steering shaft 30 by swaging or other forming techniques. This design avoids the risk of defects due to assembly in those prior art designs in which the connecting fittings are separately formed and then attached to the tubular shaft. At the same time, it avoids the notch sensitivity introduced by the pierced slots of the prior art and thereby extends the fatigue life of the steering shaft and the steering system.

## Claims

1. A steering shaft (30) supported in a steering column sleeve (25), said steering column sleeve being fixedly engaged with a fixed steering column lock housing, said steering shaft comprising a hollow cylindrical-walled tube (30) having upper and lower ends and mounted in a lower bearing (21) and an upper bearing (22) within said steering column sleeve, and an axially disposed lock slot (35), having sides parallel to a radius extending from the centre of the hollow tube (30) through a centreline of said lock slot in the wall of said hollow tune (30) for locking said steering shaft (25) against rotation when engaged by a lock pawl (55) radially extendible from the fixed steering column lock housing; characterised in that said lock slot (35) comprises a straight-side local recess (40) formed without breaching the wall of said hollow cylindrical tube (30).

2. A steering shaft according to claim 1 and further comprising connection fittings, one fitting (44) being at said upper end of said steering shaft (30) and another fitting (48) being at said lower end of said steering shaft for connection to a steering wheel and to a steering gear box, respectively.

3. A steering shaft according to claim 1 or 2, wherein the bearings in which said steering shaft is mounted in said steering column are anti-friction bearings (21,22).

4. A vehicle steering shaft with a hollow tube (30) having an axially extending lock slot (35), characterised in that said lock slot (35) is a recess (40) formed without breaching the wall of said hollow tube (30).

5. A method for making a steering shaft (30) for use in a steering column sleeve fixedly engaged with a fixed lock housing, said lock housing having a radially movable lock pawl (55) for locking said steering shaft against rotation, in a lockable steering column, said method comprising providing a hollow cylindrical-walled tube (30) having first and second ends and forming a straight-sided local axially disposed lock slot (35) in the wall of said hollow tube near the first end thereof, for releasable engagement by said lock pawl (55); characterised in that said lock slot (35) is formed between a punch tool and a mandrel by displacing a portion of the wall of said tube (30) radially inwardly into a slot in said mandrel without breaching the wall of the hollow cylindrical tube.

6. A method according to claim 5 and forming said first and second ends of said hollow cylindrical tube to provide connection fittings (44, 48) for connection to a steering wheel at said first end and for connection to a steering gear box at said second end.

7. A method according to claim 5, comprising providing connection fittings (44,48) for connecting to a steering wheel at said first end and a steering gear box at said second end and fixedly attaching said connection fittings to said first and second ends, respectively, of said hollow cylindrical shaft (30).
